(19) Europäisches Patentamt

European Patent Office

Office européen des brevets

(11) **EP 1 407 057 B1**

(12) **EUROPEAN PATENT SPECIFICATION**

(45) Date of publication and mention
of the grant of the patent:
**20.04.2005 Bulletin 2005/16**

(51) Int Cl.⁷: **C22C 21/02**, C22C 21/08,
B32B 15/01, C22F 1/043

(21) Application number: **02751058.5**

(22) Date of filing: **17.06.2002**

(86) International application number:
**PCT/EP2002/006892**

(87) International publication number:
**WO 2003/006697 (23.01.2003 Gazette 2003/04)**

(54) **WELDABLE HIGH STRENGTH AL-MG-SI ALLOY**

SCHWEISSBARE HOCHFESTE AL-MG-SI-LEGIERUNG

ALLIAGE SOUDABLE D'AL-MG-SI A HAUTE RESISTANCE

(84) Designated Contracting States:
**AT BE CH CY DE DK ES FI GR IE IT LI LU MC NL PT SE TR**

(30) Priority: **09.07.2001 EP 01202639**

(43) Date of publication of application:
**14.04.2004 Bulletin 2004/16**

(73) Proprietor: **Corus Aluminium Walzprodukte GmbH
56070 Koblenz (DE)**

(72) Inventors:
• **HASZLER, Alfred, Johann, Peter
56179 Vallendar (DE)**
• **KEIDEL, Christian, Joachim
56410 Montabaur (DE)**
• **BENEDICTUS, Rinze
NL-2612 PJ Delft (NL)**
• **WEBER, Guido
56637 Plaidt (DE)**

(74) Representative: **van der Donk, Henricus Matheus
Corus Technology BV
P.O.Box 10000
1970 CA IJmuiden (NL)**

(56) References cited:
EP-A- 0 173 632          GB-A- 2 027 744
US-A- 5 858 134

• **PATENT ABSTRACTS OF JAPAN vol. 2000, no. 05, 14 September 2000 (2000-09-14) -& JP 2000 054049 A (MITSUBISHI ALUM CO LTD), 22 February 2000 (2000-02-22)**

**Description**

This invention relates to an aluminium alloy product suitable for use in aircraft, automobiles, and other applications and a method of producing such an aluminium alloy product. More specifically, it relates to an improved weldable aluminium product, particularly useful in aircraft applications, having high damage tolerant characteristics, including improved corrosion resistance, formability, fracture toughness and increased strength properties.

It is known in the art to use heat treatable aluminium alloys in a number of applications involving relatively high strength such as aircraft fuselages, vehicular members and other applications. Aluminium alloys 6061 and 6063 are well known heat treatable aluminium alloys. These alloys have useful strength and toughness properties in both T4 and T6 tempers. As is known, the T4 condition refers to a solution heat treated and quenched condition naturally aged to a substantially stable property level, whereas T6 tempers refer to a stronger condition produced by artificially ageing. These known alloys lack, however, sufficient strength for most structural aerospace applications. Several other Aluminium Association ("AA") 6000 series alloys are generally unsuitable for the design of commercial aircraft which require different sets of properties for different types of structures. Depending on the design criteria for a particular airplane component, improvements in strength, fracture toughness and fatigue resistance result in weight savings, which translate to fuel economy over the lifetime of the aircraft, and/or a greater level of safety. To meet these demands several 6000 series alloys have been developed.

European patent no. EP-0173632 concerns extruded or forged products of an alloy consisting of the following alloying elements, in weight percent:-

| Si | 0.9 - 1.3, preferably 1.0 - 1.15 |
| Mg | 0.7 - 1.1, preferably 0.8 - 1.0 |
| Cu | 0.3 - 1.1, preferably 0.8 - 1.0 |
| Mn | 0.5 - 0.7 |
| Zr | 0.07 - 0.2, preferably 0.08 - 0.12 |
| Fe | < 0.30 |
| Zn | 0.1 - 0.7, preferably 0.3 - 0.6 |

balance aluminium and unavoidable impurities (each <0.05, total <0.15).
The products have a non-recrystallised microstructure. This alloy has been registered under the AA designation 6056.

It has been reported that this known AA6056 alloy is sensitive to intercrystalline corrosion in the T6 temper condition. In order to overcome this problem US Patent No. 5,858,134 provides a process for the production of rolled or extruded products having the following composition, in weight percent:-

| Si | 0.7 - 1.3 |
| Mg | 0.6 - 1.1 |
| Cu | 0.5 - 1.1 |
| Mn | 0.3 - 0.8 |
| Zr | < 0.20 |
| Fe | < 0.30 |
| Zn | < 1 |
| Ag | < 1 |
| Cr | < 0.25 |

other elements < 0.05, total <0.15
balance aluminium,
and whereby the products are brought in an over-aged temper condition. However, over-ageing requires time and money consuming processing times at the end of the manufacturer of aerospace components. In order to obtain the improved intercrystalline corrosion resistance it is essential for this process that in the aluminium alloy the Mg/Si ratio is less than 1.

US Patent No. 4,589,932 discloses an aluminium wrought alloy product for e.g. automotive and aerospace constructions, which alloy was subsequently registered under the AA designation 6013, having the following composition, in weight percent:-

| Si | 0.4 - 1.2, preferably 0.6 - 1.0 |

(continued)

| Mg | 0.5 - 1.3, preferably 0.7 - 1.2 |
|----|-------------------------------|
| Cu | 0.6 - 1.1 |
| Mn | 0.1 - 1.0, preferably 0.2 - 0.8 |
| Fe | < 0.6 |
| Cr | < 0.10 |
| Ti | < 0.10 |

the balance aluminium and unavoidable impurities.

The aluminium alloy has the mandatory proviso that [Si + 0.1] < Mg < [Si + 0.4], and has been solution heat treated at a temperature in a range of 549 to 582°C and approaching the solidus temperature of the alloy. In the examples illustrating the patent the ratio of Mg/Si is always more than 1.

US Patent No. 5,888,320 discloses a method of producing an aluminium alloy product. The product has a composition of, in weight percent:-

| Si | 0.6 - 1.4, preferably 0.7 - 1.0 |
|----|-------------------------------|
| Fe | < 0.5, preferably < 0.3 |
| Cu | < 0.6, preferably < 0.5 |
| Mg | 0.6 - 1.4, preferably 0.8 - 1.1 |
| Zn | 0.4 to 1.4, preferably 0.5 - 0.8 |

at least one element selected from the group:

Mn 0.2 - 0.8, preferably 0.3 - 0.5
Cr 0.05 - 0.3, preferably 0.1 - 0.2

balance aluminium and unavoidable impurities.

The disclosed aluminium alloy provides an alternative for the known high-copper containing 6013 alloy, and whereby a low-copper level is present in the alloy and the zinc level has been increased to above 0.4 wt.% and which is preferably in a range of 0.5 to 0.8 wt.%. The higher zinc content is required to compensate for the loss of copper.

In spite of these references, there is still a great need for an improved aluminium base alloy product having improved balance of strength, fracture toughness and corrosion resistance.

It is an object of the invention to provide an improved and weldable 6000-series aluminium alloy rolled product having a lower Cu-content than the known 6013 alloy, while still achieving a high strength.

It is a further object of the invention to provide an improved and weldable 6000-series aluminium alloy rolled product having a lower Cu-content than the known 6013 alloy, while achieving an ultimate tensile strength of at least 355 MPa in a T6 temper.

It is yet a further object of the invention to provide an improved and weldable 6000-series aluminium alloy rolled product having a lower Cu-content than the known 6013 alloy, while achieving an ultimate tensile strength of at least 355 MPa in a T6 temper in combination with a better intergranular corrosion performance than standard 6013 alloy.

According to the invention there is provided a weldable, high-strength aluminium alloy rolled product containing the elements, in weight percent, Si 0.8 to 1.3, Cu 0.2 to 0.45, Mn 0.5 to 1.1, Mg 0.45 to 1.0, Fe 0.01 to 0.3, Zr < 0.25, Cr < 0.25, Zn < 0.35, Ti < 0.25, V < 0.25, others each < 0.05 and total < 0.15, balance aluminium, and further with the proviso that the weight percent of available Si is in the range of 0.86 to 1.15, preferably in the range of 0.86 to 1.05. The weight percentage ("wt.%") of available Si is calculated according to the equation:

$$\text{wt.\% Si(available)} = \text{wt.\% Si} - (\text{wt.\% Fe} + \text{wt.\% Mn})/6$$

By the invention we can provide an improved and weldable AA6000-series aluminium alloy rolled product having a good balance in strength, fracture toughness and corrosion resistance, and intergranular corrosion resistance in particular. The alloy product has a lower Cu-content than standard 6013 alloys or standard 6056 alloys, while still providing sufficiently high strength levels in combination with an improved intergranular corrosion performance compared to standard 6013 alloys and/or 6056 alloys when tested in the same temper. With the alloy product according to the invention we can provide a product having a yield strength of 325 MPa or more and an ultimate tensile strength of 355 MPa or more. The alloy product may be welded successfully using techniques like e.g. laser beam welding, friction-stir welding and TIG-welding.

The product can either be naturally aged to produce an improved alloy product having good formability in the T4 temper or artificially aged to a T6 temper to produce an improved alloy having high strength and fracture toughness, along with good corrosion resistance properties. A good balance in strength and corrosion performance it being obtained without a need for bringing the product to an over-aged temper, but by careful selection of narrow ranges for the Cu, Mg, Si, and Mn- contents and such that there is sufficient Si available in a defined range as strengthening element.

The balance of high formability, good fracture toughness, high strength, and good corrosion resistance properties of the weldable aluminium alloy of the present invention are dependent upon the chemical composition that is closely controlled within specific limits in more detail as set forth below. All composition percentages are by weight percent.

A preferred range for the silicon content is from 1.0 to 1.15% to optimise the strength of the alloy in combination with magnesium. A too high Si content has a detrimental influence on the elongation in the T6 temper and on the corrosion performance of the alloy. As set out above the available silicon is preferably in a range of 0.86 to 1.05 to achieve the best balance in strength and corrosion performance. A too low Si content, and thereby a low amount of available silicon, does not provide sufficient strength to the alloy.

Magnesium in combination with the silicon provides strength to the alloy. The preferred range of magnesium is 0.6 to 0.85%, and more preferably 0.6 to 0.75%. At least 0.45% magnesium is needed to provide sufficient strength while amounts in excess of 1.0% make it difficult to dissolve enough solute to obtain sufficient age hardening precipitate to provide high T6 strength.

Copper is an important element for adding strength to the alloy. However, too high copper levels in combination with Mg have a detrimental influence of the corrosion performance and on the weldability of the alloy product. The preferred copper content is in the range of 0.3 to 0.45% as a compromise in strength, toughness, formability and corrosion performance. It has been found that in this range the alloy product has a good resistance against IGC.

The preferred range of manganese is 0.6 to 0.78%, and more preferably 0.65 to 0.78%. Mn contributes to or aids in grain size control during operations that can cause the alloy to recrystallise, and contributes to increase strength and toughness.

The zinc content in the alloy according to the invention should be less than 0.35%, and preferably less than 0.2%. It has been reported in US 5,888,320 that the addition of zinc may add to the strength of the aluminium alloy, but in accordance with the invention it has been found that too high zinc contents have a detrimental effect of the intergranular corrosion performance of the product. Furthermore, the addition of zinc tends to produce an alloy having undesirable higher density, which is in particular disadvantageous when the alloy is being applied for aerospace applications.

Iron is an element having a strong influence on the formability and fracture toughness of the alloy product. The iron content should be in the range of 0.01 to 0.3%, and preferably 0.01 to 0.25%, and more preferably 0.01 to 0.2%.

Titanium is an important element as a grain refiner during solidification of the rolling ingots, and should preferably be less than 0.25%. In accordance with the invention it has been found that the corrosion performance, in particular against intergranular corrosion, can be remarkably be improved by having a Ti-content in the range of 0.06 to 0.20%, and preferably 0.07 to 0.16%. It has been found that the Ti may be replaced in part or in whole by vanadium.

Zirconium and/or chromium and/or hafnium may be added to the alloy each in an amount of less than 0.25% to improve the recrystallisation behaviour and/or the corrosion performance (in particular IGC) of the alloy. At too high levels the Cr present may form undesirable large particles with the Mg in the alloy product.

The balance is aluminium and inevitable impurities. Typically each impurity element is present at 0.05% maximum and the total of impurities is 0.15% maximum.

The best results are achieved when the alloy rolled products have a recrystallised microstructure, meaning that 80% or more, and preferably 90% or more of the grains in a T4 or T6 temper are recrystallised.

The product according to the invention is preferably therein characterised that the alloy having been aged to the T6 temper in an ageing cycle which comprises exposure to a temperature of between 150 and 210°C for a period between 1 and 20 hours, thereby producing an aluminium alloy product having a yield strength of 325 MPa or more, and preferably of 330 MPa or more, and an ultimate tensile strength of 355 MPa or more, and preferably of 365 MPa or more.

Furthermore, the product according to the invention is preferably therein characterised that the alloy having been aged to the T6 temper in an ageing cycle which comprises exposure to a temperature of between 150 and 210°C for a period between 1 and 20 hours, thereby producing an aluminium alloy product having an intergranular corrosion after a test according to MIL-H-6088 present to a depth of less than 180 μm, and preferably to a depth of less than 150 μm.

In an embodiment the invention also consists in that the product of this invention may be provided with at least one cladding. Such clad products utilise a core of the aluminium base alloy product of the invention and a cladding of usually higher purity in particularly corrosion protecting the core. The cladding includes, but is not limited to, essentially unalloyed aluminium or aluminium containing not more than 0.1 or 1% of all other elements. Aluminium alloys herein designated 1xxx-type series include all Aluminium Association (AA) alloys, including the sub-classes of the 1000-type, 1100-type, 1200-type and 1300-type. Thus, the cladding on the core may be selected from various Aluminium Association alloys such as 1060, 1045, 1100, 1200, 1350, 1170, 1175, 1180, or 1199. In addition, alloys of the AA7000-series alloys, such as 7072 containing zinc (0.8 to 1.3%), can serve as the cladding and alloys of the AA6000-series alloys, such as AA6003 or AA6253, which contain typically more than 1% of alloying additions, can serve as cladding. Other alloys could also be useful as cladding as long as they provide in particular sufficient overall corrosion protection to the core alloy.

In addition, a cladding of the AA4000-series alloys can serve as cladding. The AA4000-series alloys have as main alloying element silicon typically in the range of 6 to 14%. In this embodiment the clad layer provides the welding filler material in a welding operation, e.g. by means of laser beam welding, and thereby overcoming the need for the use of additional filler wire materials in a welding operation. In this embodiment the silicon content is preferably in a range of 10 to 12%.

The clad layer or layers are usually much thinner than the core, each constituting 2 to 15 or 20 or possibly 25% of the total composite thickness. A cladding layer more typically constitutes around 2 to 12% of the total composite thickness.

In a preferred embodiment the alloy product according to the invention is being provided with a cladding thereon on one side of the AA1000-series and on the other side thereon of the AA4000-series. In this embodiment corrosion protection and welding capability are being combined. In this embodiment the product may be used successfully for example for pre-curved panels. In case the rolling practice of an asymmetric sandwich product (1000-series alloy + core + 4000-series alloy) causes some problems such as banaring, there is also the possibility of first rolling a symmetric sandwich product having the following subsequent layers 1000-series alloy + 4000-series alloy + core alloy + 4000-series alloy + 1000-series alloy, where after one or more of the outer layer(s) are being removed, for example by means of chemical milling.

The invention also consists in a method of manufacturing the aluminium alloy product according to the invention. The method of producing the alloy product comprises the sequential process steps of: (a) providing stock having a chemical composition as set out above, (b) preheating or homogenising the stock, (c) hot rolling the stock, (d) optionally cold rolling the stock, (e) solution heat treating the stock, and (f) quenching the stock to minimise uncontrolled precipitation of secondary phases. Thereafter the product can be provided in a T4 temper by allowing the product to naturally age to produce an improved alloy product having good formability, or can be provided in a T6 temper by artificial ageing. To artificial age, the product in subjected to an ageing cycle which comprises exposure to a temperature of between 150 and 210°C for a period between 0.5 and 30 hours.

The aluminium alloy as described herein can be provided in process step (a) as an ingot or slab for fabrication into a suitable wrought product by casting techniques currently employed in the art for cast products, e.g. DC-casting, EMC-casting, EMS-casting. Slabs resulting from continuous casting, e.g. belt casters or roll casters, may be used also.

Typically, prior to hot rolling the rolling faces of both the clad and the non-clad products are scalped in order to remove segregation zones near the cast surface of the ingot.

The cast ingot or slab may be homogenised prior to hot rolling and/or it may be preheated followed directly by hot rolling. The homogenisation and/or preheating of the alloy prior to hot rolling should be carried out at a temperature in the range 490 to 580°C in single or in multiple steps. In either case, the segregation of alloying elements in the material as cast is reduced and soluble elements are dissolved. If the treatment is carried out below 490°C, the resultant homogenisation effect is inadequate. If the temperature is above 580°C, eutectic melting might occur resulting in undesirable pore formation. The preferred time of the above heat treatment is between 2 and 30 hours. Longer times are not normally detrimental. Homogenisation is usually performed at a temperature above 540°C. A typical preheat temperature is in the range of 535 to 560°C with a soaking time in a range of 4 to 16 hours.

After the alloy product is cold rolled, or if the product is not cold rolled then after hot rolling, the alloy product is solution heat treated at a temperature in the range of 480 to 590°C, preferably 530 to 570°C, for a time sufficient for solution effects to approach equilibrium, with typical soaking times in the rang of 10 sec. to 120 minutes. With clad products, care should be taken against too long soaking times to prevent diffusion of alloying element from the core into the cladding which can detrimentally affect the corrosion protection afforded by said cladding.

After solution heat treatment, it is important that the alloy product be cooled to a temperature of 175°C or lower, preferably to room temperature, to prevent or minimise the uncontrolled precipitation of secondary phases, e. g. $Mg_2Si$. On the other hand cooling rates should not be too high in order to allow for a sufficient flatness and low level of residual stresses in the alloy product. Suitable cooling rates can be achieved with the use of water, e.g. water immersion or water jets.

The product according to the invention has been found to be very suitable for application as a structural component of an aircraft, in particular as aircraft fuselage skin material, preferably having a thickness of up to 15 mm.

EXAMPLE.

Six different alloys have been DC-cast into ingots, then subsequently scalped, pre-heated for 6 hours at 550°C (heating-up speed about 30°C/h), hot rolled to a gauge of 7.5mm, cold rolled to a final gauge of 2.0mm, solution heat treated for 15 min. at 550°C, water quenched, aged to a T6-temper by holding for 4 hours at 190°C (heat-up speed about 35°C/h), followed by air cooling to room temperature. Table 1 gives the chemical composition of the alloys cast, balance inevitable impurities and aluminium, and whereby Alloy no. 1 and 4 are alloys according to the invention and the other alloys are for comparison.

The tensile testing and intergranular corrosion ("IGC") testing have been carried out on the bare sheet material in the T6-temper and having a fully recystallised microstructure. For the tensile testing in the L-direction small euro-norm specimens were used, average results of 3 specimens are given, and whereby "Rp" stands for yield strength, "Rm" for ultimate tensile strength, and A50 for elongation. The "TS" stands for tear strength, and has been measured in the L-T direction in accordance with ASTM-B871-96. Intergranular corrosion ("ICG") was tested on two specimens of 50x60 mm in accordance with the procedure given in AIMS 03-04-000, which specifies MIL-H-6088 and some additional steps. The maximum depth in microns has been reported in Table 3.

From the test results in Table 2 and 3 it can be seen that from a comparison of Alloy 1 and 2 that a too high Si-content in the aluminium alloy has an adverse effect on the TS, and in particular the maximum intergranular corrosion depth is significantly increased. From a comparison of Alloy 1 and 3 it can be seen that a too high Zn-content in the aluminium alloy has an adverse effect on the maximum intergranular corrosion depth. From a comparison of Alloy 1 with standard alloys 6056 and 6013 in a T6-temper it can be seen that the alloy product according to the invention has a significantly better performance in intergranular corrosion at the trade-off the somewhat lower tensile properties. The lower TS of the alloy product according to the invention compared to standard 6056 and 6013 is due to a significantly lower Cu-content in the aluminium alloy. From a comparison of Alloy 1 and 4 (both according to the invention) it can be seen that an increase in the Ti-content in the aluminium alloy product results in a remarkable reduction of the maximum intergranular corrosion depth.

Having now fully described the invention, it will be apparent to one of ordinary skill in the art that many changes and modifications can be made without departing from the spirit or scope of the invention as herein described.

Table 1.

| Chemical composition of the alloys tested. | | | | | | | | |
|---|---|---|---|---|---|---|---|---|
| **Alloy** | **Alloying element [wt. %]** | | | | | | | |
| | **Si** | **Fe** | **Cu** | **Mn** | **Mg** | **Zn** | **Ti** | **Si $_{av}$** |
| **1** (inv.) | 1.05 | 0.19 | 0.29 | 0.72 | 0.70 | 0.09 | 0.03 | 0.89 |
| **2** (comp) | 1.33 | 0.14 | 0.3 | 0.69 | 0.69 | 0.08 | 0.03 | 1.19 |
| **3** (comp) | 1.04 | 0.14 | 0.28 | 0.69 | 0.72 | 1.5 | 0.02 | 0.90 |
| **4** (inv.) | 1.14 | 0.17 | 0.47 | 0.72 | 0.68 | 0.15 | 0.10 | 0.99 |
| **standard 6056** | 0.92 | 0.15 | 0.90 | 0.46 | 0.88 | 0.08 | 0.02 | 0.81 |
| **standard 6013** | 0.79 | 0.17 | 0.96 | 0.35 | 0.90 | 0.09 | 0.03 | 0.70 |

Table 2.

| Tensile properties in the L-direction in T62-temper sheet material. | | | | |
|---|---|---|---|---|
| **Alloy** | **Rp [MPa]** | **Rm [MPa]** | **A50 [%]** | **L-T TS [MPa]** |
| **1** | 347 | 368 | 12 | 558 |
| **2** | 340 | 371 | 14 | 526 |
| **3** | 345 | 366 | 9 | 543 |
| **4** | 346 | 373 | 12 | 540 |
| **standard 6056** | 362 | 398 | 12 | 601 |

Table 2. (continued)

| Tensile properties in the L-direction in T62-temper sheet material. | | | | |
|---|---|---|---|---|
| **Alloy** | **Rp [MPa]** | **Rm [MPa]** | **A50 [%]** | **L-T TS [MPa]** |
| **standard 6013** | 369 | 398 | 9 | 613 |

Table 3.

| ICG corrosion results in the T62-temper. | |
|---|---|
| **Alloy** | **Depth of max. [μm]** |
| **1** | 130 |
| **2** | 183 |
| **3** | 203 |
| **4** | 90 |
| **standard 6056** | 177 |
| **standard 6013** | 187 |

**Claims**

1.  Weldable, high-strength aluminium alloy rolled product containing the elements, in weight percent:-

| Si | 0.8 - 1.3 |
|---|---|
| Cu | 0.2 - 0.45 |
| Mn | 0.5 - 1.1 |
| Mg | 0.45 - 1.0 |
| Fe | 0.01 - 0.3 |
| Zr | < 0.25 |
| Cr | < 0.25 |
| Zn | < 0.35 |
| Ti | < 0.25 |
| V | < 0.25 |

others each < 0.05, total < 0.15
balance aluminium,
and with the proviso that the weight percent of available Si is in the range of 0.86 to 1.15, wherein the weight percent of available Si is calculated according to the equation:

$$\text{wt.\% Si(available)} = \text{wt.\% Si} - (\text{wt.\% Fe} + \text{wt.\% Mn})/6,$$

and further wherein the product has a more than 80% recrystallised microstructure.

2.  Product in accordance with claim 1, wherein the Si level is in the range of 1.0 to 1.15.

3.  Product in accordance with claim 1 or 2, wherein the Cu level is in the range of 0.3 to 0.45.

4.  Product in accordance with any one of claims 1 to 3, wherein the Mn level is in the range of 0.65 to 0.78.

5.  Product in accordance with any one of claims 1 to 4, wherein the Mg level is in the range of 0.6 to 0.85.

6.  Product in accordance with any one of claims 1 to 5, wherein the Ti level is in the range of 0.06 to 0.2.

7. Product in accordance with any one of claims 1 to 6, wherein the Zn level is in a range of less than 0.2.

8. Product in accordance with any one of claims 1 to 7, wherein the alloy having been aged to the T6 temper in an ageing cycle which comprises exposure to a temperature of between 150 and 210°C for a period between 0.5 and 30 hours, to thereby produce an aluminium alloy product **characterised by** an intergranular corrosion after an MIL-H-6088 test is present to a depth less than 180 µm.

9. Product in accordance with any one of claims 1 to 8, wherein the product has a single or multiple cladding thereon of the following:

(i) it is of a higher purity aluminium alloy than said product;
(ii) the cladding is of the Aluminium Association AA1000-series;
(iii) the cladding is of the Aluminium Association AA4000-series;
(iv) the cladding is of the Aluminium Association AA6000-series;
(v) the cladding is of the Aluminium Association AA7000-series.

10. Product in accordance with claim 9, wherein the alloy product has a cladding thereon on one side of the Aluminium Association AA1000-series and on the other side thereon of the Aluminium Association AA4000-series.

11. The method of producing the weldable, high-strength alloy product according to any one of claims 1 to 10, comprises the sequential process steps of:

(a) providing stock having a chemical composition according to any one of claims 1 to 7,
(b) preheating or homogenising the stock,
(c) hot rolling the stock,
(d) optionally cold rolling the stock,
(e) solution heat treating the stock,
(f) quenching the stock to minimise uncontrolled precipitation of secondary phases, and
(g) ageing the quenched stock to provide an alloy product in a T4 temper or in a T6 temper.

12. Product according to any one of claim 1 to 10 or manufactured according to claim 11 wherein the product is a structural component of an aircraft.

13. Product according to any one of claims 1 to 10 or manufactured according to claim 11, wherein the product is aircraft skin material.

14. Product according to any one of claims 1 to 10 or manufactured according to claim 11 wherein the product is an aircraft fuselage skin material.

**Patentansprüche**

1. Gewalztes Produkt aus einer schweißbaren, hochfesten Aluminiumlegierung, das folgende Elemente in Gewichtsprozent enthält:

| | |
|---|---|
| Si | 0,8 - 1,3 |
| Cu | 0,2 - 0,45 |
| Mn | 0,5 - 1,1 |
| Mg | 0,45 -1,0 |
| Fe | 0,01 - 0,3 |
| Zr | < 0,25 |
| Cr | < 0,25 |
| Zn | < 0,35 |
| Ti | < 0,25 |
| V | < 0,25 |

andere jeweils < 0,05, insgesamt < 0,15
Rest Aluminium,

und unter der Voraussetzung, dass die Gewichtsprozent des verfügbaren Si im Bereich von 0,86 bis 1,15 liegen, wobei die Gewichtsprozent des verfügbaren Si nach der Gleichung berechnet sind:

$$\text{Gew.-\% Si(verfügbar)} = \text{Gew.-\% Si} - (\text{Gew.-\% Fe} + \text{Gew.-\% Mn})/6,$$

und wobei des Weiteren das Produkt eine zu mehr als 80 % umkristallisierte Mikrostruktur aufweist.

2. Produkt nach Anspruch 1, wobei das Si-Niveau im Bereich von 1,0 bis 1,15 liegt.

3. Produkt nach Anspruch 1 oder 2, wobei das Cu-Niveau im Bereich von 0,3 bis 0,45 liegt.

4. Produkt nach einem der Ansprüche 1 bis 3, wobei das Mn-Niveau im Bereich von 0,65 bis 0,78 liegt.

5. Produkt nach einem der Ansprüche 1 bis 4, wobei das Mg-Niveau im Bereich von 0,6 bis 0,85 liegt.

6. Produkt nach einem der Ansprüche 1 bis 5, wobei das Ti-Niveau im Bereich von 0,06 bis 0,2 liegt.

7. Produkt nach einem der Ansprüche 1 bis 6, wobei das Zn-Niveau im Bereich von weniger als 0,2 liegt.

8. Produkt nach einem der Ansprüche 1 bis 7, wobei die Legierung bis zu dem T6 Härtegrad in einem Alterungszyklus gealtert wurde, der das Aussetzen einer Temperatur zwischen 150° und 210°C über einen Zeitraum zwischen 0,5 und 30 Stunden beinhaltet, um dadurch ein Aluminiumlegierungsprodukt herzustellen, **gekennzeichnet durch** eine interkristalline Korrosion, nachdem ein MIL-H-6088 Test bis zu einer Tiefe von weniger als 180 µm vorliegt.

9. Produkt nach einem der Ansprüche 1 bis 8, wobei sich auf dem Produkt folgende Einfach- oder Mehrfachplattierschicht befindet:

(i) sie besteht aus einer Aluminiumlegierung höherer Reinheit als das Produkt;
(ii) die Plattierschicht stammt aus der Aluminium Association AA1000-Serie;
(iii) die Plattierschicht stammt aus der Aluminium Association AA4000-Serie;
(iv) die Plattierschicht stammt aus der Aluminium Association AA6000-Serie ;
(v) die Plattierschicht stammt aus der Aluminium Association AA7000-Serie.

10. Produkt nach Anspruch 9, wobei das legierte Produkt auf der einen Seite eine Plattierschicht aus der Aluminium Association AA1000-Serie und auf der anderen Seite eine aus der Aluminium Association AA4000-Serie aufweist.

11. Verfahren zur Herstellung des schweißbaren, hochfesten legierten Produkts nach einem der Ansprüche 1 bis 10, das folgende Verfahrensablaufschritte enthält:

(a) Bereitstellen eines Stoffs oder Rohlings mit einer chemischen Zusammensetzung nach einem der Ansprüche 1 - 7,
(b) Vorwärmen oder Homogenisieren des Stoffs,
(c) Warmwalzen des Stoffs,
(d) wahlweises Kaltwalzen des Stoffs,
(e) Lösungsglühen des Stoffs,
(f) Abschrecken des Stoffs, um das unkontrollierte Ausscheiden von Sekundärphasen zu minimieren, und
(g) Altern des abgeschreckten Stoffs, um ein legiertes Produkt mit einem T4 Härtegrad oder einem T6 Härtegrad bereitzustellen.

12. Produkt nach einem der Ansprüche 1 bis 10 oder hergestellt nach Anspruch 11, wobei das Produkt ein Strukturbauteil eines Flugzeugs bildet.

13. Produkt nach einem der Ansprüche 1 bis 10 oder nach Anspruch 11 hergestellt, wobei das Produkt ein Flugzeughautmaterial bildet.

**14.** Produkt nach einem der Ansprüche 1 bis 10 oder nach Anspruch 11 hergestellt, wobei das Produkt ein Hautmaterial für den Flugzeugrumpf bildet.

**Revendications**

**1.** Produit laminé en alliage d'aluminium à haute résistance, soudable, qui contient les éléments suivants, les chiffres indiqués étant les pourcentages en poids :

| Si | 0,8 - 1,3 |
|----|-----------|
| Cu | 0,2 - 0,45 |
| Mn | 0,5 - 1,1 |
| Mg | 0,45 - 1,0 |
| Fe | 0,01 - 0,3 |
| Zr | < 0,25 |
| Cr | < 0,25 |
| Zn | < 0,35 |
| Ti | < 0,25 |
| V | < 0,25 |

Autres éléments : chacun < 0,05, total < 0,15
Complément : aluminium,
étant entendu que le pourcentage en poids de Si disponible est compris dans l'intervalle allant de 0,86 à 1,15, le pourcentage en poids de Si disponible étant calculé suivant l'équation :

$$\text{\% en poids de Si (disponible)} = \text{\% en poids de Si} - (\text{\% en poids de Fe} + \text{\% en poids de Mn})/6,$$

ledit produit ayant en outre une microstructure recristallisée à plus de 80 %.

**2.** Produit selon la revendication 1, dont la teneur en Si est comprise dans l'intervalle allant de 1,0 à 1,15 % en poids.

**3.** Produit selon la revendication 1 ou 2, dont la teneur en Cu est comprise dans l'intervalle allant de 0,3 à 0,45 % en poids.

**4.** Produit selon l'une quelconque des revendications 1 à 3, dont la teneur en Mn est comprise dans l'intervalle allant de 0,65 à 0,78 % en poids.

**5.** Produit selon l'une quelconque des revendications 1 à 4, dont la teneur en Mg est comprise dans l'intervalle allant de 0,6 à 0 ,85 % en poids.

**6.** Produit selon l'une quelconque des revendications 1 à 5, dont la teneur en Ti est comprise dans l'intervalle allant de 0,06 à 0,2 % en poids.

**7.** Produit selon l'une quelconque des revendications 1 à 6, dont la teneur en Zn est inférieure à 0,2 % en poids.

**8.** Produit selon l'une quelconque des revendications 1 à 7, dont l'alliage a été vieilli jusqu'à l'état de trempe T6 dans un cycle de vieillissement qui comprend la soumission à une température comprise entre 150 et 210 °C pendant une durée comprise entre 0,5 heure et 30 heures, pour produire ainsi un produit en alliage d'aluminium qui est **caractérisé en ce qu'**il présente, après le test MIL-H-6088, une corrosion intergranulaire sur une profondeur inférieure à 180 µm.

**9.** Produit selon l'une quelconque des revendications 1 à 8, qui porte un revêtement simple ou multiple, constitué de :

(i) un alliage d'aluminium plus pur que celui dudit produit,
(ii) un produit de la série AA1000 de Aluminium Association,

(iii) un produit de la série AA4000 de Aluminium association,

(iv) un produit de la série AA6000 de Aluminium Association, ou

(v) un produit de la série AA7000 de Aluminium Association.

10. Produit selon la revendication 9, qui porte sur un côté un revêtement constitué d'un produit de la série AA1000 de Aluminium Association, et sur l'autre côté un revêtement constitué d'un produit de la série AA4000 de Aluminium Association.

11. Procédé de production du produit en alliage à haute résistance, soudable, selon l'une quelconque des revendications 1 à 10, qui comprend les étapes successives suivantes :

(a) la fourniture d'une matière première ayant une composition chimique selon l'une quelconque des revendications 1 à 7,

(b) le préchauffage ou l'homogénéisation de la matière première,

(c) le laminage à chaud de la matière première,

(d) éventuellement le laminage à froid de la matière première,

(e) le traitement thermique de solution de la matière première,

(f) la trempe de la matière première pour réduire au minimum la précipitation incontrôlée de phases secondaires, et

(g) le vieillissement de la matière première trempée pour obtenir un produit en alliage dans un état de trempe T4 ou dans un état de trempe T6.

12. Produit selon l'une quelconque des revendications 1 à 10 ou produit préparé par le procédé selon la revendication 11, qui est un constituant de la structure d'un avion.

13. Produit selon l'une quelconque des revendications 1 à 10 ou produit préparé par le procédé selon la revendication 11, qui est un matériau du revêtement d'un avion.

14. Produit selon l'une quelconque des revendications 1 à 10 ou produit préparé par le procédé selon la revendication 11, qui est un matériau du revêtement du fuselage d'un avion.